# EUROPÄISCHE PATENTSCHRIFT

(11) **EP 3 188 944 B1**
(45) Veröffentlichungstag und Bekanntmachung des Hinweises auf die Patenterteilung: **21.08.2019**
(21) Anmeldenummer: 15762956.9
(22) Anmeldetag: 02.09.2015
(51) Int. Cl.: B60T 17/00

(54) **VERFAHREN UND SYSTEM ZUR REGENERATION EINES DRUCKLUFTSYSTEMS**
METHOD AND SYSTEM FOR PRESSURE SYSTEM REGENERATION
METHODE ET SYSTEME POUR LA REGENERATION DU SYSTÈME DE PRESSION D'AIR

(30) Priorität: 04.09.2014 DE 102014112781
(43) Veröffentlichungstag der Anmeldung: 12.07.2017
(73) Patentinhaber: KNORR-BREMSE Systeme für Nutzfahrzeuge GmbH, 80809 München (DE)
(72) Erfinder: BORDÁCS, Zoltán, H-8200 Veszprém (HU); KRABÓT, Mátyás, H-2310 Szigetszentmiklós (HU); DÖME, Csongor, H-7632 Pecs (HU)
(86) Internationale Anmeldenummer: PCT/EP2015/069981
(87) Internationale Veröffentlichungsnummer: WO 2016/034601

(56) Entgegenhaltungen:
- WO-A1-02/096732
- WO-A2-2006/093569
- DE-A1- 19 911 741

## Beschreibung

Die vorliegende Erfindung betrifft ein Verfahren zum Betrieb eines Druckluftsystems eines Kraftfahrzeugs, wobei während einer Ladephase Umgebungsluft durch einen Kompressor in einen Drucklufttrakt gepumpt wird, und darin durch einen Lufttrockner getrocknet wird, und bei dem während einer Regenerationsphase trockene Luft aus einem Druckluftreservoir durch den Lufttrockner geleitet wird, wodurch dieser getrocknet wird, und der Kompressor gleichzeitig gekühlt wird. Ferner bezieht sich die Erfindung auf ein das Verfahren betreffendes Druckluftsystem.

Das Einsatzgebiet der Erfindung erstreckt sich auf Druckluftsysteme, insbesondere von motorisierten Fahrzeugen, bei denen Kompressoren wie beispielsweise Kolbenkompressoren eingesetzt werden, um Umgebungsluft anzusaugen und beispielsweise in Druckluftreservoirs zur Verfügung zu stellen, von wo diese Druckluft beispielsweise über Ventile gesteuert verwendet werden kann, um verschiedene Systeme, wie beispielsweise Bremssysteme, mit Energie zu versorgen.

Solche Druckluftsysteme arbeiten im Wesentlichen in zwei verschiedenen Betriebszyklen.

In einer Ladephase wird Umgebungsluft angesaugt und beispielsweise in ein Druckluftreservoir gepumpt, wobei sie auf dem Weg dorthin durch einen Lufttrockner getrocknet wird.

In einer Regenerationsphase wird trockene Druckluft aus dem Druckluftreservoir entgegen der Strömungsrichtung aus der Ladephase durch den Lufttrockner geleitet, um diesen Lufttrockner, der gegebenenfalls durch angesammeltes Kondenswasser mit Flüssigkeit gesättigt ist, selbst zu trocknen.

In der Regenerationsphase wird ferner der Kompressor, der während der Ladephase aufgrund der Arbeit gegen den Luftdruck und aufgrund der Reibung mechanischer Komponenten wie beispielsweise Zylinderkolben an Brennkammerinnenwänden erhitzt wird, nicht mehr zur Kompression von Druckluft eingesetzt. Somit kühlt der Kompressor während der Regenerationsphase zusätzlich ab, gegebenenfalls verstärkt durch eine Kühlvorrichtung.

Die Notwendigkeit einer solchen Regenerationsphase ergibt sich also zum einen aus der Ansammlung von Flüssigkeit im Lufttrockner, die dessen Effizienz verringert oder diesen gänzlich unbrauchbar macht, und zum anderen aus der Erhitzung des Luftkompressors, welche beispielsweise zur Folge haben kann, dass Schmieröl beispielsweise an den Außenwänden der Zylinder eines Kolbenkompressors entlang bis in eine Brennkammer vordringen kann, von wo es beispielsweise in den Lufttrockner oder in andere Elemente des Druckluftsystems vordringen und diese verschmutzen kann.

Aus der WO 02/096732 A1 geht ein Verfahren zum Betrieb eines Druckluftsystems hervor, bei welchem in festen Zeitabständen der einen Luftkompressor durchquerende Teilchenstrom abgeschätzt wird, um auf Grundlage dieses Schätzwertes in die Regenerationsphase zu wechseln.

Aus der DE 199 11 741 A1 geht eine Luftaufbereitungsvorrichtung hervor, bei dem die Bestimmung der Sättigung des Lufttrockners auf der Kenntnis des Liefergrades des Kompressors beruht. Dann wird in Abhängigkeit der Drehzahl und des Hubvolumens des Kompressors die Menge an feuchter Luft abgeschätzt, die durch den Lufttrockner geleitet wird.

Es ist die Aufgabe der vorliegenden Erfindung, ein Verfahren zu schaffen, die Überhitzung des Kompressors oder die Sättigung des Lufttrockners automatisiert zu erkennen und dementsprechend den Betriebszyklus des Druckluftsystems umzuschalten.

Das Problem wird durch ein Verfahren zum Betrieb eines Druckluftsystems nach Anspruch 1 und ein Druckluftsystem nach Anspruch 7 gelöst.

Die Erfindung schließt die technische Lehre ein, dass die Masse und/oder das Volumen und/oder der Druck und/oder die Temperatur der gepumpten Luft und/oder die Temperatur der Umgebungsluft und/oder des den Kompressor schmierenden Schmieröls und/oder die Drehzahl des Kompressors und/oder die Luftfeuchtigkeit der Umgebungsluft sensorisch erfasst und integriert wird, und dass in Abhängigkeit des mindestens einen Integrals von der Ladephase in die Regenrationsphase gewechselt wird, und dass in Abhängigkeit des Integrals des Drucks der gepumpten Luft und/oder der Drehzahl des Kompressors und/oder der Luftfeuchtigkeit der Umgebungsluft und/oder der Temperatur der Umgebungsluft und/oder des Schmieröls die Temperatur des Kompressors abgeschätzt wird.

Der Vorteil dieses Verfahrens ist unter anderem darin zu sehen, dass lediglich Sensorik verwendet wird, die in Kraftfahrzeugen üblich ist, dass auf Abschätzung beispielsweise des Liefergrades des Kompressors verzichtet wird. Das Integral wird dabei beispielsweise über die Dauer des jeweiligen Betriebszyklus, also der Ladephase oder der Regenrationsphase, gebildet, wodurch sich insbesondere zufällige oder statistische Schwankungen in dem jeweiligen sensorisch erfassten Messwert ausgleichen beziehungsweise nur geringfügig auf den Betrieb auswirken.

In Weiterbildungen dieses Verfahrens wird anschließend bei Überschreiten einer oberen kritischen Temperatur beziehungsweise bei Überschreiten des Integrals über einen kritischen Schwellwert von der Ladephase in die Regenerationsphase gewechseit. Somit wird einem Überhitzen des Kompressors vorgebeugt, was wiederum unter anderem ein Eindringen von Schmieröl in den Luftkreislauf verhindert.

Eine weitere bevorzugte Ausführungsform der Erfindung sieht vor, dass in Abhängigkeit des Integrals der Drehzahl des Kompressors und/oder des Integrals des Drucks der gepumpten Luft und/oder des Integrals der Temperatur und/oder des Integrals der Luftfeuchtigkeit der Umgebungsluft die Sättigung des Lufttrockners abgeschätzt wird.

Eine auf diese Ausführungsform des Verfahrens bezogene Verbesserung der Erfindung sieht vor, dass bei Überschreiten eines oberen kritischen Sättigungsschwellwertes aus der Ladephase in die Regenerationsphase gewechselt wird.

Der Vorteil dieses Verfahrens ist darin zu sehen, dass somit einer Sättigung des Lufttrockners mit Feuchtigkeit entgegengewirkt wird.

Die Erfindung betrifft weiterhin eine technische Lehre, dass in einem Druckluftsystem eine Steuereinheit vorgesehen ist, welche die von den Sensoren aufgenommenen Daten verwertet und welche zwischen Ladephase und Regenerationsphase umschaltet, um das erfindungsgemäße Verfahren durchzuführen.

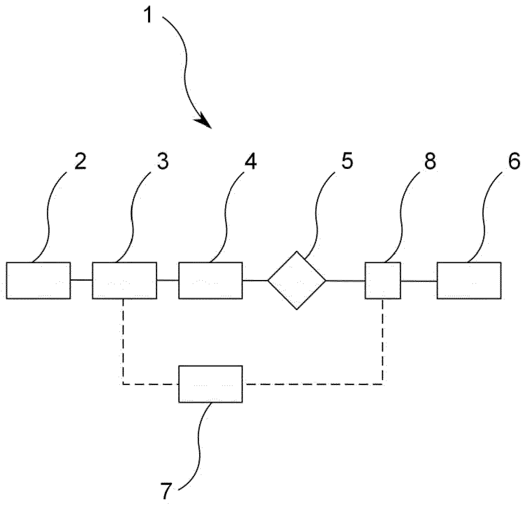

Weitere die Erfindung verbessernden Maßnahmen werden nachstehend gemeinsam mit der Beschreibung eines bevorzugten Ausführungsbeispiels der Erfindung anhand der einzigen Figur näher dargestellt. Die Figur zeigt das Schema eines Druckluftsystems, mit dem das erfindungsgemäße Verfahren durchführbar ist.

Gemäß Figur weist ein Druckluftsystem 1 eines hier nicht dargestellten Kraftfahrzeugs einen Kompressor 3 auf, welcher eingangsseitig Umgebungsluft 2 ansaugt und in einen Drucklufttrakt 4 hineinpumpt. Pneumatische Leitungen sind als durchgezogenen Linien und elektrische Leitungen als gestrichelte Linien dargestellt. Teil des Drucklufttraktes 4 ist ein Lufttrockner 5, in welchem durch ein Trocknungsmittel wie beispielsweise ein Granulat Feuchtigkeit aus der Luft absorbiert wird. Hinter dem Trocknungsmittel angeordnet ist ein Druckluftreservoir 6, welches zur Speicherung und zur Bereitstellung von trockener Druckluft dient. Eine elektronische Steuereinheit 7 regelt über die hier gestrichelt dargestellten elektrischen Leitungen sowohl den Kompressor 3 als auch ein Durchflussventil 8, welches zwischen Lufttrockner und Druckluftreservoir angeordnet ist, um die jeweils erlaubte Strömungsrichtung für die Ladephase und die Regenerationsphase in dem Druckluftsystem vorzugeben.

Über nicht dargestellte Sensoren misst die Steuereinheit 7 den Druck und die Temperatur der gepumpten Luft im Drucklufttrakt 4, die Drehzahl des Kompressors 3 und die Temperatur des den Kompressor schmierenden Schmieröls sowie die Feuchtigkeit und die Temperatur der Umgebungsluft 2. Diese Werte werden über die Dauer des jeweiligen Betriebszyklus integriert und mit jeweils zugeordneten Schwellwerten, die in der Steuereinheit hinterlegt sind, verglichen.

Somit wird beispielsweise bei Überschreiten der integrierten Temperatur des Schmieröls des Kompressors 3 dieser abgeschaltet beziehungsweise in einen Leerlauf geschaltet, wodurch der Kompressor 3 durch einen hier nicht dargestellten Kühlmechanismus effektiver gekühlt werden kann. Gleichzeitig wird durch die Steuereinheit 7 das Ventil 8 derart umgeschaltet, dass Druckluft in Regenerationsrichtung aus dem Druckluftreservoir 6 durch den Lufttrockner 5 strömen kann, um diesen zu trocknen.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, dass mehrere Lufttrockner in Reihe geschaltet sind.

### Bezugszeichenliste

- 1: Druckluftsystem
- 2: Umgebungsluft
- 3: Kompressor
- 4: Drucklufttrakt
- 5: Lufttrockner
- 6: Druckluftreservoir
- 7: Steuereinheit
- 8: Ventil

## Patentansprüche

1. Verfahren zum Betrieb eines Druckluftsystems (1) eines Kraftfahrzeugs, bei dem während einer Ladephase Umgebungsluft (2) durch einen Kompressor (3) in einen Drucklufttrakt (4) gepumpt wird, und darin durch einen Lufttrockner (5) getrocknet wird, und bei dem während einer Regenerationsphase trockene Luft aus einem Druckluftreservoir (6) durch den Lufttrockner (5) geleitet wird, wodurch dieser getrocknet wird, und der Kompressor (3) gleichzeitig gekühlt wird, wobei die Masse und / oder das Volumen und / oder der Druck und / oder die Temperatur der gepumpten Luft und / oder die Temperatur der Umgebungsluft und / oder des den Kompressor (3) schmierenden Schmieröls und / oder die Drehzahl des Kompressors (3) und / oder die Luftfeuchtigkeit der Umgebungsluft (2) sensorisch erfasst und integriert wird, und dass in Abhängigkeit des mindestens einen Integrals von der Ladephase in die Regenerationsphase gewechselt wird, **dadurch gekennzeichnet, dass** in Abhängigkeit des Integrals des Drucks der gepumpten Luft und / oder der Drehzahl des Kompressors (3) und / oder der Luftfeuchtigkeit der Umgebungsluft (2) und / oder der Temperatur der Umgebungsluft (2) und / oder des Schmieröls die Temperatur des Kompressors (3) abgeschätzt wird.

2. Verfahren nach Anspruch 1,
**dadurch gekennzeichnet, dass** bei Überschreiten der geschätzten Temperatur des Kompressors (3) über einen kritischen Temperaturschwellwert aus der Ladephase in die Regenerationsphase gewechselt wird.

3. Verfahren nach Anspruch 1 oder 2,
**dadurch gekennzeichnet, dass** bei Überschreiten eines Integrals über einen diesem Integral zugeordneten kritischen Wert aus Ladephase in die Regenerationsphase gewechselt wird.

4. Verfahren nach einem der vorherigen Ansprüche,
**dadurch gekennzeichnet, dass** in Abhängigkeit des Integrals der Drehzahl des Kompressors (3) und / oder des Drucks der gepumpten Luft und / oder der Temperatur und / oder der Luftfeuchtigkeit der Umgebungsluft die Sättigung des Lufttrockners (5) abgeschätzt wird.

5. Verfahren nach Anspruch 4,
**dadurch gekennzeichnet, dass** bei Überschreiten der abgeschätzten Sättigung des Lufttrockners (5) über einen kritischen Sättigungsschwellwert aus der Ladephase in die Regenerationsphase gewechselt wird.

6. Verfahren nach Anspruch 4 oder 5,
**dadurch gekennzeichnet, dass** bei Überschreiten eines Integrals über einen diesem Integral zugeordneten kritischen Wert aus Ladephase in die Regenerationsphase gewechselt wird.

7. Druckluftsystem (1) für ein Kraftfahrzeug, das während einer Ladephase Umgebungsluft (2) durch einen Kompressor (3) in einen Drucklufttrakt (4) pumpt, die darin ein Lufttrockner (5) trocknet, um während einer Regenerationsphase trockene Luft aus einem Druckluftreservoir (6) durch den Lufttrockner (5) zu leiten, um diesen zu trocknen, und den Kompressor (3) gleichzeitig zu kühlen, wobei eine Steuereinheit (7) vorgesehen ist, welche über Sensoren die Masse und / oder das Volumen und / oder der Druck und / oder die Temperatur der gepumpten Luft und / oder die Temperatur der Umgebungsluft und / oder des den Kompressor (3) schmierenden Schmieröls und / oder die Drehzahl des Kompressors (3) und / oder die Luftfeuchtigkeit der Umgebungsluft (2) erfasst und integriert, und in Abhängigkeit des mindestens einen Integrals durch Ansteuerung des Kompressors (3) und eines zwischen Lufttrockner (5) und Druckluftreservoir (6) angeordneten Durchflussventils (8) von der Ladephase in die Regenerationsphase wechselt, **dadurch gekennzeichnet, dass** die Steuereinheit (7) die Temperatur des Kompressors (3) in Abhängigkeit des Integrals des Drucks der gepumpten Luft und / oder der Drehzahl des Kompressors (3) und / oder der Luftfeuchtigkeit der Umgebungsluft und / oder der Temperatur der Umgebungsluft (2) und / oder des Schmieröls abschätzt.

8. Druckluftsystem (1) nach Anspruch 7,
**dadurch gekennzeichnet, dass** die Steuereinheit (7) die Sättigung des Lufttrockners (5) in Abhängigkeit des Integrals der Drehzahl des Kompressors (3) und / oder des Drucks der gepumpten Luft und / oder der Temperatur und / oder der Luftfeuchtigkeit der Umgebungsluft (2) abschätzt.

## Claims

1. Method for operating a compressed-air system (1) of a motor vehicle, in which during a charging phase ambient air (2) is pumped by a compressor (3) into a compressed-air section (4) and is dried therein by an air dryer (5), and in which during a regeneration phase dry air is passed out of a compressed-air reservoir (6) through the air dryer (5), as a result of which the latter is dried and at the same time the compressor (3) is cooled,
wherein
the mass and/or the volume and/or the pressure and/or the temperature of the air pumped in, and/or the temperature of the ambient air and/or of the lubricating oil which lubricates the compressor (3) and/or the rotation speed of the compressor (3) and/or the air humidity of the ambient air (2) is/are detected by sensor means and integrated, and a change is made from the charging phase to the regeneration phase as a function of the at least one integral,
**characterized in that**
the temperature of the compressor (3) is estimated as a function of the integral of the pressure of the air pumped in and/or of the rotation speed of the compressor (3) and/or of the humidity of the ambient air (2) and/or of the temperature of the ambient air (2) and/or of the lubricating oil.

2. Method according to Claim 1,
**characterized in that** if the estimated temperature of the compressor (3) exceeds a critical temperature threshold, a change is made from the charging phase to the regeneration phase.

3. Method according to Claims 1 or 2,
**characterized in that** if an integral exceeds a critical value associated with that integral, a change is made from the charging phase to the regeneration phase.

4. Method according to any of the preceding claims,
**characterized in that** the saturation-level of the air dryer (5) is estimated as a function of the integral of the rotation speed of the compressor (3) and/or of the pressure of the air pumped in and/or of the temperature and/or of the humidity of the ambient air.

5. Method according to Claim 4,
**characterized in that** if the estimated saturation-level of the air dryer (5) exceeds a critical saturation threshold value, a change is made from the charging phase to the regeneration phase.

6. Method according to Claims 4 or 5,
**characterized in that** if an integral exceeds a critical value associated with the said integral, a change is made from the charging phase to the regeneration phase.

7. Compressed-air system (1) for a motor vehicle, which during a charging phase pumps ambient air (2) by means of a compressor (3) into a compressed-air section (4), which air is dried therein by an air dryer (5), so that during a regeneration phase dry air can be passed from a compressed-air reservoir (6) through the air dryer (5) in order to dry the latter and at the same time to cool the compressor (3),
wherein
a control unit (7) is provided, which by means of sensors detects the mass and/or the temperature of the air pumped in and/or the temperature of the ambient air and/or that of the lubricating oil that lubricates the compressor (3) and/or the rotation speed of the compressor (3) and/or the humidity of the ambient air (2) and integrates them, and as a function of the at least one integral, changes from the charging phase to the regeneration phase by controlling the compressor (3) and a through-flow valve (8) arranged between the air dryer (5) and the compressed-air reservoir (6),
**characterized in that**
the control unit (7) estimates the temperature of the compressor (3) as a function of the integral of the pressure of the air pumped in and/or of the rotation speed of the compressor (3) and/or of the humidity of the ambient air and/or of the temperature of the ambient air (2) and/or that of the lubricating oil.

8. Compressed-air system (1) according to Claim 7,
**characterized in that** the control unit (7) estimates the saturation-level of the air dryer (5) as a function of the integral of the rotation speed of the compressor (3) and/or of the pressure of the air pumped in and/or of the temperature and/or the humidity of the ambient air (2).

## Revendications

1. Procédé pour faire fonctionner un système (1) à air comprimé d'un véhicule automobile, dans lequel, pendant une phase de charge, on pompe de l'air (2) ambiant par un compresseur (3) dans une section (4) d'air comprimé et on l'y sèche par un sécheur (5) d'air et dans lequel, pendant une phase de régénération, on envoie de l'air séché d'un réservoir (6) d'air comprimé dans le sécheur (5) d'air, celui-ci étant ainsi séché, et on refroidit en même temps le compresseur (3), dans lequel on relève, par capteur, et on intègre la masse et/ou le volume et/ou la pression et/ou la température de l'air pompé et/ou la température de l'air ambiant et/ou de l'huile de lubrification lubrifiant le compresseur (3) et/ou la vitesse de rotation du compresseur (3) et/ou l'humidité de l'air (2) ambiant et on passe de la phase de charge à la phase de régénération en fonction d'au moins une intégrale, **caractérisé en ce que** l'on estime la température du compresseur (3) en fonction de l'intégrale de la pression de l'air pompé et/ou de la vitesse de rotation du compresseur (3) et/ou de l'humidité de l'air (2) ambiant et/ou de la température de l'air (2) ambiant et/ou de l'huile de lubrification.

2. Procédé suivant la revendication 1,
**caractérisé en ce que**, si la température estimée du compresseur (3) dépasse une valeur de seuil de température critique, on passe de la phase de charge à la phase de régénération.

3. Procédé suivant la revendication 1 ou 2,
**caractérisé en ce que**, si une intégrale dépasse une valeur critique associée à cette intégrale, on passe de la phase de charge à la phase de régénération.

4. Procédé suivant l'une des revendications précédentes,
**caractérisé en ce que** l'on estime la saturation du sécheur (5) d'air en fonction de l'intégrale de la vitesse de rotation du compresseur (3) et/ou de la pression de l'air pompé et/ou de la température et/ou de l'humidité de l'air ambiant.

5. Procédé suivant la revendication 4,
**caractérisé en ce que**, si la saturation estimée de l'air (5) du compresseur dépasse une valeur de seuil de saturation critique, on passe de la phase de charge à la phase de régénération.

6. Procédé suivant la revendication 4 ou 5,
**caractérisé en ce que**, si une intégrale dépasse une valeur critique associée à cette intégrale, on passe de la phase de charge à la phase de régénération.

7. Système (1) à air comprimé d'un véhicule automobile, qui, pendant une phase de charge, pompe de l'air (2) ambiant par un compresseur (3) dans une section (4) d'air comprimé qu'un sécheur (5) d'air y sèche pour envoyer, pendant une phase de régénération, de l'air séché d'un réservoir (6) d'air comprimé dans le sécheur (5) d'air afin de sécher celui-ci, et de refroidir en même temps le compresseur (3),
dans lequel il est prévu une unité (7) de commande, qui relève, par des capteurs, et intègre la masse et/ou le volume et/ou la pression et/ou la température de l'air pompé et/ou la température de l'air ambiant et/ou de l'huile de lubrification lubrifiant le compresseur (3) et/ou la vitesse de rotation du compresseur (3) et/ou l'humidité de l'air (2) ambiant et, en fonction d'au moins une intégrale, passe de la phase de charge à la phase de régénération en commandant le compresseur (3) et une vanne (8) de passage montée entre le sécheur (5) d'air et le réservoir (6) d'air comprimé,
**caractérisé en ce que** l'unité (7) de commande évalue la température du compresseur (3) en fonction de l'intégrale de la pression de l'air pompé et/ou de la vitesse de rotation du compresseur (3) et/ou de l'humidité de l'air ambiant et/ou de la température de l'air (2) ambiant.

8. Système (1) à air comprimé suivant la revendication 7,
**caractérisé en ce que** le dispositif (7) de commande évalue la saturation du sécheur (5) d'air en fonction de l'intégrale de la vitesse de rotation du compresseur (3) et/ou de la pression de l'air pompé et/ou de la température et/ou de l'humidité de l'air (2) ambiant.
